# EUROPÄISCHE PATENTSCHRIFT

(11) **EP 1 084 870 B1**
(45) Veröffentlichungstag und Bekanntmachung des Hinweises auf die Patenterteilung: **30.06.2004**
(21) Anmeldenummer: 00119959.5
(22) Anmeldetag: 14.09.2000
(51) Int. Cl.: B60D 1/06, B60D 1/54

(54) **Schwenkbare Anhängerkupplung mit selbsttätiger Verriegelung**
Self-locking pivotal towing device
Dispositif d'attelage articulé à verrouillage automatique

(30) Priorität: 15.09.1999 DE 19944082
(43) Veröffentlichungstag der Anmeldung: 21.03.2001
(73) Patentinhaber: Jaeger Cartronix GmbH, 61169 Friedberg (DE)
(72) Erfinder: Lüttmer, Hanno, 24837 Schleswig (DE); Grossmann, Ralf, 24837 Schleswig (DE)
(74) Vertreter: KEIL & SCHAAFHAUSEN

(56) Entgegenhaltungen:
- WO-A-98/57813
- DE-A- 19 654 867
- US-A- 5 853 186

## Beschreibung

Die Erfindung betrifft eine Anhängerkupplung für Kraftfahrzeuge gemäß dem oberbegriff des Anspruchs 1.

Aus der DE 196 54 867 sind Anhängerkupplungen bekannt, die es auf einfache Weise ermöglichen, motorisch betrieben durch einen Schalter, der vorwiegend im Kofferraum angeordnet ist, die Kugelstange der Anhängerkupplung wegzuklappen bzw. -schwenken. Es ist also nicht mehr nötig, die Demontage der Kugelstange vorzunehmen, die mit körperlichen Anstrengungen und Verlust von Stauraum verbunden ist.

Das Wegklappen bzw. -schwenken wird dadurch gelöst, daß ein Schwenkantrieb über ein Ritzel eine Welle antreibt, auf der ein Sperrkonus axial verschiebbar angeordnet ist. Ist der Sperrkonus eingefahren, dann wird die Welle blockiert und die Ritzelwelle schwenkt in einer Ausnehmung in den Seitenplatten nach unten, wobei die Kugelstange in die Gebrauchststellung schwenkt. Beim Einfahren geht es genau umgekehrt. Diese relativ aufwendige Bauweise birgt natürlich durch die Anzahl der Bauteile eine Vielzahl von Fehlerquellen durch Abnutzungserscheinungen, Paßungenauigkeiten etc. mit sich. Außerdem ist der bauliche Aufwand hoch. Ein weiterer Punkt ist die nachteilige Gewichtsbelastung und der relativ voluminöse Platzbedarf. Letztere zwei Punkte spielen in der Automobiltechnik eine immer wesentlichere Rolle, da bei allen Bauteilen eines Kraftfahrzeuges ein möglichst geringes Gewicht erstrebt wird. Es ist aber auch ein immer größer werdendes Bedürfnis für Sicherheit und Komfort vorhanden. An die Verriegelung der Anhängerkupplung ist also eine sehr hohe Anforderung gestellt.

Aufgabe dieser Erfindung ist es, eine schwenkbare Anhängerkupplung vorzugeben, die, durch eine einfache Motorsteuerung angetrieben, mit möglichst wenigen Bauteilen ein- und ausgeschwenkt bzw. -geklappt werden kann. Es soll zusätzlich eine möglichst verschleißarme Bauweise erreicht werden.

Die Aufgabe der Erfindung wird durch die Merkmale im kennzeichnenden Teil des Anspruchs 1 gelöst. Der Konus wird zur Verriegelung der Kugelstange in der Betriebsstellung auf der Keilwelle axial nach außen verschoben. Es werden sehr wenig Bauteile benötigt, um diese einfache Lösung durchzuführen. Obendrein ist gerade durch die einfache Bauweise ein sehr stabiles und funktionierendes System gewährleistet. Durch die konusartige Ausformung ist das Spiel der Anhängerkupplung in vertikaler Richtung sowie in horizontaler Richtung sehr gering. Durch Einbau mehrerer Konen kann die Sicherheit und Festigkeit der Anhängerkupplung noch erhöht werden. Diese könnten vorzugsweise in zwei Richtungen auf der Keilwell axial verschiebbar angeordnet sein.

In einer ersten Ausgestaltungsform ist vorgesehen, daß der Konus auf der Keilwelle durch eine Führungsschiene axial geführt verschiebbar angeordnet ist. Durch diese Maßnahme wird die Festigkeit erhöht, und Anfälligkeit des Systems verringert, da der Konus sich nicht mehr so leicht aus seiner Verriegelungsstellung lösen kann. In den letzten Jahren geht das Bestreben der Automobilindustrie immer mehr in Richtung Verricngerung des Fahrzeuggewichtes. Bei einem Zusatzteil wie einer Anhängerkupplung scheint dieser Aspekt besonders wichtig. Durch den einfachen Aufbau der vorliegenden Ausgestaltungsform wird ein größtmögliche Gewichtsreduktion trotz hoher Stabilität erreicht.

In einer weiteren Ausführungsform ist vorgesehen, daß ein Außengewinde des Konus in ein Innengewinde, das in der Kugelstange eingebracht ist, eingreift. Die Drehbewegung der Keilwelle kann durch diese Maßnahme dazu genutzt werden, den Konus in die Verriegelungsstellung einzufahren. Dies erleichtert die Funktion um ein vielfaches, da der Bediener nicht mehr von Hand einzugreifen braucht. Außerdem sind die Sicherungen bzw die Konen gegen Verrutschen geschützt.

In einer weiteren Ausführungsform ist vorgesehen, daß der Konus durch Eingreifen in eine Verriegelungsöffnung der Seitenplatte selbsttätig formschlüssig ver- und entriegelnd ausgebildet ist. Der Konus wird direkt in die Seitenplatten eingefahren, die mit dem Chassis verbunden sind und die Kugelstange einfassen. Dadurch wird die optimale Verriegelungssicherheit und - festigkeit erreicht, da so wenig Bauteile wie möglich verwendet werden. Zusätzliche Sicherheit bringt ein weiterer Konus, der gegenüberliegend zum ersten Konus angeordnet sein könnte und dadurch eine eventuelle einseitige Belastung eines einzelnen Konus stark reduziert.

In einer weiteren Ausführungsform ist vorgesehen, daß mindestens ein Kerbstift, der in eine Ausnehmung der Seitenplatte eingreift und an der Kugelstange befestigt ist, die Schwenkbewegung durch jeweils einen Anschlag für die Betriebsstellung und die Ruhestellung begrenzend ausgebildet ist. Dieser Kerbstift begrenzt die Schwenkbewegung in den Endstellungen, nämlich Ruhestellung und Betriebsstellung, so daß ein Überdrehen oder Ausrasten der Kugelstage aus dem System verhindert wird. Der Kerbstift.greift in eine Nut in der Seitenplatte ein. Dieses Merkmal erhöht weiter die Sicherheit und ist trotzdem sehr verschleißarm und kostengünstig durchführbar.

In einer weiteren Ausführungsform ist vorgesehen, daß eine Reibschlußverbindung zwischen dem Konus und dem Zahnrad die Kraft der Antriebswelle auf die Kugelstange übertragend ausgebildet ist. Die Sicherungskonen übernehmen durch eine Anschlagsflächenpressung an das Zahnrad hierbei eine Doppelfunktion. Zum einen eine selbsttätige Verriegelung in Bewegunsrichtung zur Betriebsstellung, zum anderen die Mitnahme der Kugelstange durch Anschlagsflächenpressung auf dem antreibenden Zahnrad in Richtung zur Ruhestellung und auch aus der Ruhestellung wieder zurück zur Arbeitsstellung. Sobald der Kerbstift auf Anschlag ist, lösen sich die Konen, da die Flächenpreßkraft kleiner wird als das Drehmoment. Somit bewegt sich durch weiterdrehen der Antriebswelle auch die Keilwelle, wodurch die Konen selbsttätig in die Verriegelungsöffnung einfahren.

In einer weiteren Ausführungsform ist vorgesehen, daß mindestens eine Sicherung, vorzugsweise eine federbelastete Kugel, in eine Aufnahmehülse in der Kugelstange einrastend ausgebildet ist. Während der Übernahme der Drehbewegung zum Beginn der Verriegelungsbewegung wird die Kugelstange durch die Sicherung arretiert, um nicht durch ihr Eigengewicht nach dem Lösen der Flächenpressung zurückzuschwenken, bevor die Konen in die Verriegelungsöffnung eingefahren sind. Durch diese Sicherung wird ein genauer Ablauf der vier Stufen von der Nichtgebrauchsstellung über das Einfahren der Konen, das Schwenken der Kugelstange, das Ausfahren der Konen und schließlich das Verriegeln in der Gebrauchsstellung erreicht. Eine Entlastung des Motors wird dadurch ebenfalls zuwege gebracht.

In einer weiteren Ausgestaltungsform ist vorgesehen, daß eine Halterung für die Sicherung vorgesehen ist. Durch die Anschraubung der Halterung kann die Sicherung leicht ausgetauscht werden. Außerdem ist ein modulartiger Aufbau in der Automobilindustrie erwünscht, da Änderungen in der Form für verschiedene Automodelle nötig sein können und durch solche Maßnahmen wesentlich vereinfacht werden. Standardkompnenten können dadurch in großen Stückzahlen wesentlich günstiger hergestellt werden.

In einer weiteren Ausgestaltungsform ist vorgesehen, daß ein Sensor, vorzugsweise ein wassergeschützter Mikroschalter, vorgesehen ist, der ein Signal gebend ausgebildet ist, wenn der Konus in die Verriegelungsöffnung eingefahren ist. Dieser Sensor wird zur Kontrolle für die Steuerung des Motors verwendet. Er meldet, ob die Konen ausgefahren sind und somit die Betreibsstellung erreicht ist oder ob der oder die Konen eingefahren sind und die Kugelstange schwenkbar ist. Besonders wichtig ist die Ausgestaltung des Sensors als wassergschützter Mikroschalter, da gerade im Bereich der Anhängerkupplung oft Spritzwasser vorkommt und der Sensor die Funktion versagen könnte

Ein weiterer Schutz des Sensors ist dadurch möglich, daß der Sensor in der Halterung angeordnet ist. Die Halterung ist fest mit einer der Seitenplatten verschraubt. Eventuelles Spritzwasser wird also schon dadurch zurückgehalten.

In einer weiteren Ausgestaltungsform ist vorgesehen, daß zwischen dem Zahnrad und dem Konus mindestens eine Beilagscheibe, vorzugsweise eine beschichtete Zahnradauflage, angeordnet ist. Diese Scheibe gewährleistet ein sanfteres Lösen des Konus vom Zahnrad. Dadurch wird der Verschleiß weiter reduziert. Im Verschleißfalle muß dann außerdem nur die beschichtete Scheibe ausgetauscht werden und nicht das wesentlich teurere Zahnrad oder der Konus.

In einer weiteren Ausgestaltungsform ist vorgesehen, daß die Kugelstange einen Antrieb aufweist, der über eine Wirkverbindung schaltbar ist und dessen Schalter außerhalb der Fahrgastzelle, vorzugsweise im Kofferraum, des Kraftfahrzeuges angeordnet ist. Die Anhängerkupplung darf nicht während der Fahrt des Kraftfahrzeuges geschwenkt werden. Ebenso soll ein Schalter leicht erreichbar sein und der Schalter soll zusätzlich vor Wasser geschützt sein. Es ist also von Vorteil, einen Schalter zum Beispiel im kofferraum des Kraftfahrzeuges anzubringen.

Die Erfindung wird in einer bevorzugten, beispielhaften Ausführungsform unter Bezugnahme auf Zeichnungen näher beschrieben, wobei weitere vorteilhafte Einzelheiten den Figuren zu entnehmen sind. Funktionsmäßig gleiche Teile sind dabei mit denselben Bezugszeichen versehen.

Die Zeichnungen zeigen im einzelnen:
- Fig. 1:: schematische Darstellung der zusammengebauten Anhängerkupplung in Aufsicht
- Fig. 2:: schematische Darstellung der zusammengebauten Anhängerkupplung in Frontansicht
- Fig. 3:: schematische Darstellung der zusammengebauten Anhängerkupplung mit eingezeichneter Ruhestellung und Betriebsstellung in der Seitenansicht
- Fig. 4:: Darstellung des Schnittes gemäß Linie A-A aus Figur 3 durch den Antrieb der Kugelstange
- Fig. 5:: Explosionsdarstellung der Anhängerkupplung mit Elektromotor

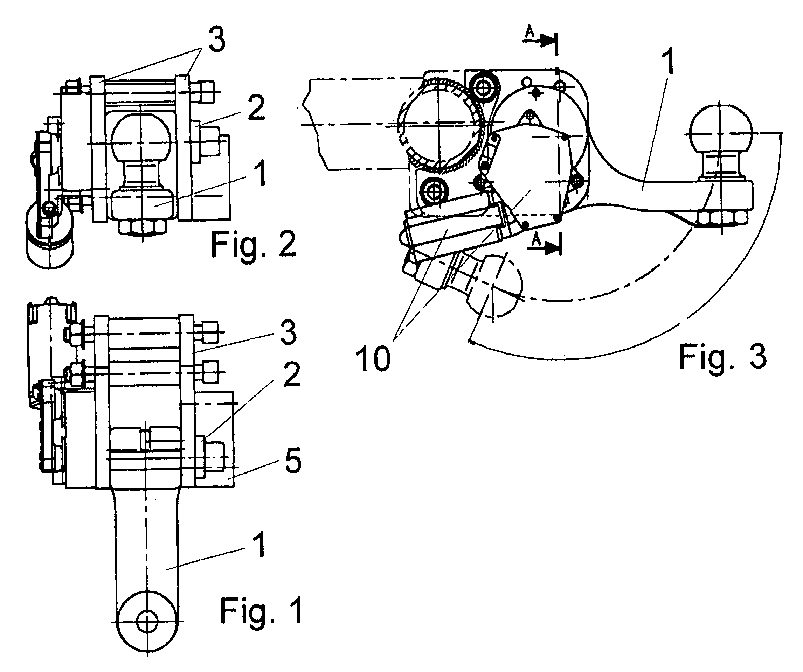

Die erfindungsgemäße Anhängerkupplung ist in Figur 1 dargestellt. Die Kugelstange 1 ist zwischen zwei parallelen Seitenplatten 3 angeordnet, wobei sie durch Verschraubungen zwischen den beiden Seitenplatten und durch die orthogonal dazu ausgerichtete Antriebswelle 2 schwenkbar befestigt ist. Der Antrieb 10 ist links an der Anhängerkupplung angebracht und treibt die Antriebswelle 2 an, wodurch die Kugelstange 1 von der Ruhestellung in die Betriebsstellung und zurück geschwenkt werden kann.

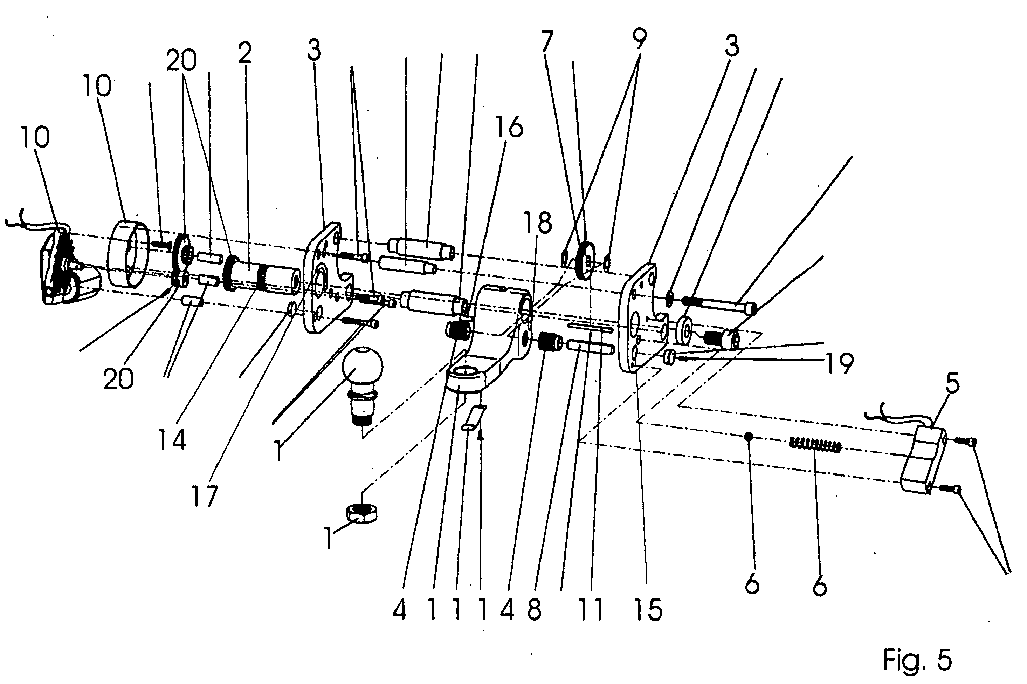

An der rechten Seite der Anhängerkupplung ist eine Halterung 5 für die in Figur 5 dargestellte Sicherung 6 und den Sensor 19 vorgesehen, um die empfindlichen Teile gegen Spritzwasser zu schützen.

Figur 2 zeigt die Frontansicht der zusammengebauten Anhängerkupplung. Die Kugelstange 1 kann nach unten weggeschwenkt werden. Die Bewegung ist durch die beiden Seitenplatten 3 geführt. Die Antreibswelle stellt die Drehachse dar.

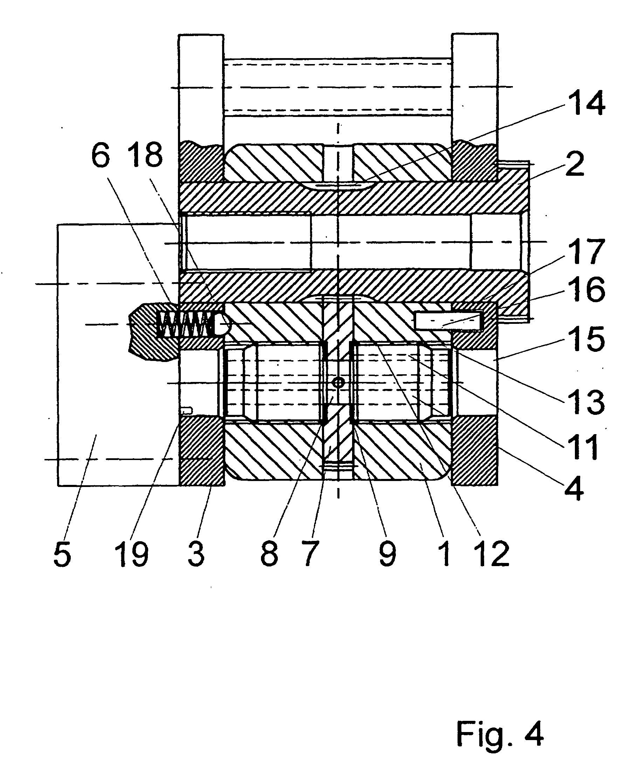

In Figur 3 ist eine Seitenansicht der zusammengebauten Anhängerkupplung gezeigt. Die Schwenkbewegung der Kugelstange 1 ist ebenfalls dargestellt. Es ist ferner ein Schnitt A-A eingezeichnet, der in Figur 4 dargestellt ist.

Der Schnitt gemäß Linie A-A aus Figur 1 zeigt wiederum die beiden Seitenplatten 3, welche die Kugelstange 1 links und rechts anliegen. In der Mitte ist die Antriebswelle 2 angeordnet, die gleichzeitig die Dreh- bzw. Schwenkachse der Kugelstange 1 darstellt. Sie wird durch den rechts liegenden Antrieb angetrieben, der hier zum leichteren Verständnis der elementaren Bauteile nicht dargestellt ist

In die Antriebswelle 2 ist eine Außenverzahnung 14 eingearbeitet, die das unterhalb liegende Zahnrad 7 antreibt, welches auf der Keilwelle 8 befestigt ist.

Die Keilwelle 8 befindet sich in einer Ausnehmung der Kugelstange mit Innengewinde 13. Auf der Keilwelle 8 sind zwei Konen 4 links und rechts von dem Zahnrad 7 angeordnet, die gegenläüfig in die Innengewinde 13 eingreifen und von der Führungsschiene 11 auf der Keilwelle axial nach außen verschiebbar geführt sind.

Sobald der Kerbstift 16 in der Ausnehmung 17, einem bogenförmigen Schlitz, zum Anschlag gelangt, wird die Reibschlußkraft zwischen dem Zahnrad 7 und den Konen 4 überwunden und die Konen werden durch die gegenläufige Innengewinde 13 axial nach außen in die Verriegelungsöffnungen 15 verschoben.

Zur geringeren Abnutzung der Bauteile Zahnrad 7 und Konus 4 ist zwischen diesen eine Beilagscheibe 9 vorgesehen, die beschichtet ist und für ein sanfteres lösen und schließen des Formschlusses sorgt.

Eine weitere Sicherungsvorrichtung ist die links abgebildete federbelastete Kugel 6, die in eine Aufnahmehülse 18 in der Kugelstange 1 greift, sobald diese sich in der Betriebsstellung befindet. Dadurch wird ein zurückschwenken der Kugelstange verhindert, bevor die Konen 4 in die Verriegelungsöffnung eingefahren sind.

Der Sensor 19 ragt aus der Halterung in die Verriegelungsöffnung 15 hinein, um der Motorsteuerung ein Signal für die Stellung des Konus 4 zu übermitteln.

Für den elektrischen Antrieb 10 ist vorgesehen, daß dieser abschaltet, sobald die Last einen vorher eingestellten Grenzwert überschreitet. Dadurch werden Schäden vermieden, falls beim Bewegen der Kugelstange 1 Fremdkörper den weiteren Betrieb behindern sollten. Damit die Verstellung nicht während der Fahrt des Kraftfahrzeuges eingeleitet werden kann, ist außerdem vorgesehen, daß die Anhängerkupplung nur von außerhalb der Fahrgastzelle betätigt werden kann. Besonders vorteilhaft ist es, wenn die Betätigungseinrichtung, zum Beispiel ein Schalter, im Kofferraum des Fahrzeugs angeordnet ist.

Auf diese Weise ist eine Fahrzeugkupplung geschaffen, die leicht und bequem in eine Lage gebracht werden kann, in der sie nicht mehr stört. Die Anhängerkupplung ist außerdem störungsunanfällig und sehr verschleißarm. Sie besitzt wenige Bauteile und läßt sich leicht warten.

Figur 5 zeigt eine Explosionsdarstellung eines Ausführungsbeispiels der erfindungsgemäßen Anhängerkupplung mit einem Antrieb 10, der links dargestellt ist. Die Explosionszeichnung soll zum besseren Verständnis des Zusammenwirkens der beiden Wellen und der automatischen Verreigelung dienen.

### Bezugszeichenliste

- 1:: Kugelstange
- 2:: Antriebswelle
- 3:: Seitenplatten
- 4:: Konus
- 5:: Halterung
- 6:: Sicherung
- 7:: Zahnrad
- 8:: Keilwelle
- 9:: Beilagscheibe
- 10:: Antrieb
- 11:: Führungsschiene
- 12:: Außengewinde
- 13:: Innengewinde
- 14:: Außenverzahnung
- 15:: Verriegelungsöffnung
- 16:: Kerbstift
- 17:: Ausnehmung
- 18:: Aufnahmehülse
- 19:: Sensor
- 20:: Getriebe

## Patentansprüche

1. Anhängerkupplung für Kraftfahrzeuge, mit einer Kugelstange (1), wobei die Kugelstange (1) zwischen einer Ruhestellung und einer Betriebsstellung schwenkbar ausgebildet ist und die Kugelstange (1) für eine Schwenkbewegung, Ver- und Entriegelungsbewegung mindestens einen Antrieb (10), vorzugsweise einen elektrischen Antrieb, aufweist, welcher über ein Getriebe (20) mit einer Antriebswelle (2) verbunden ist, und die Kugelstange (1) um die mit ihr verbundene Antriebswelle (2) mit mindestens einer Außenverzahnung (14) zwischen zwei miteinander verbundenen parallelen Seitenplatten (3) schwenkbar angebracht ist und die Außenverzahnung (14) mit einem Zahnrad (7) in Wirkverbindung steht, welches auf einer Keilwelle, auf der mindestens ein Konus (4) axial verschiebbar angeordnet ist, (8) drehfest angeordnet ist, **dadurch gekennzeichnet, daß** die Außenverzahnung (14) in das Zahnrad (7) eingreift.

2. Anhängerkupplung für Kraftfahrzeuge nach Anspruch 1, **dadurch gekennzeichnet, daß** der Konus (4) auf der Keilwelle (8) durch eine Führungsschiene (11) axial geführt verschiebbar angeordnet ist.

3. Anhängerkupplung für Kraftfahrzeuge nach Anspruch 1 oder 2, **dadurch gekennzeichnet, daß** ein Außengewinde (12) des Konus (4) in ein Innengewinde (13), das in der Kugelstange (1) eingebracht ist, eingreift.

4. Anhängerkupplung für Kraftfahrzeuge nach Anspruch 1, 2 oder 3, **dadurch gekennzeichnet, daß** der Konus (4) durch Eingreifen in eine Verriegelungsöffnung (15) der Seitenplatte (3) selbsttätig formschlüssig ver- und entriegelnd ausgebildet ist.

5. Anhängerkupplung für Kraftfahrzeuge nach einem der vorherigen Ansprüche, **dadurch gekennzeichnet, daß** mindestens ein Kerbstift (16), der in eine Ausnehmung (17) der Seitenplatte (3) eingreift und an der Kugelstange (1) befestigt ist, die Schwenkbewegung durch jeweils einen Anschlag für die Betriebsstellung und die Ruhestellung begrenzend ausgebildet ist.

6. Anhängerkupplung für Kraftfahrzeuge nach einem der vorherigen Ansprüche, **dadurch gekennzeichnet, daß** eine Reibschlußverbindung zwischen dem Konus (4) und dem Zahnrad (7) die Kraft der Antriebswelle auf die Kugelstange (1) übertragend ausgebildet ist.

7. Anhängerkupplung für Kraftfahrzeuge nach einem der vorherigen Ansprüche, **dadurch gekennzeichnet, daß** mindestens eine Sicherung (6), vorzugsweise eine federbelastete Kugel, in eine Aufnahmehülse (18) in der Kugelstange (1) einrastend ausgebildet ist.

8. Anhängerkupplung für Kraftfahrzeuge nach Anspruch 7, **dadurch gekennzeichnet, daß** eine Halterung (5) für die Sicherung (6) vorgesehen ist.

9. Anhängerkupplung für Kraftfahrzeuge nach Anspruch 4, **dadurch gekennzeichnet, daß** ein Sensor (19), vorzugsweise ein wassergeschützter Mikroschalter, vorgesehen ist, der ein Signal gebend ausgebildet ist, wenn der Konus (4) in die Verriegelungsöffnung (15) eingefahren ist.

10. Anhängerkupplung für Kraftfahrzeuge nach Anspruch 8 und 9, **dadurch gekennzeichnet, daß** der sensor (19) in der Halterung (5) angeordnet ist.

11. Anhängerkupplung für Kraftfahrzeuge nach einem der vorherigen Ansprüche, **dadurch gekennzeichnet, daß** zwischen dem Zahnrad (7) und dem Konus (4) mindestens eine Zahnradauflage (9), vorzugsweise eine beschichtete Zahnradauflage, angeordnet ist.

12. Anhängerkupplung für Kraftfahrzeuge nach einem der vorherigen Ansprüche, **dadurch gekennzeichnet, daß** die Kugelstange (1) einen Antrieb (10) aufweist, der über eine Wirkverbindung schaltbar ist und dessen Schalter außerhalb der Fahrgastzelle, vorzugsweise im Kofferraum, des Kraftfahrzeuges angeordnet ist.

## Claims

1. Trailer coupling for motor vehicles with a combined hook (1), in which the combined hook (1) is designed so as to swivel between an inoperative position and an operative position and the combined hook (1) displays at least one drive element (10) for swivelling movement and locking and unlocking movement, advantageously an electrical drive which is linked via a set of gears (20) to a drive shaft (2) and the combined hook (1) is pivotably attached by the drive shaft (2) connected to it with at least one external toothing (14) between two parallel side plates (3) connected to each other and the external toothing (14) actively engages with a toothed wheel (7) which is disposed non-rotatably on a conical shaft (8) on which at least one cone (4) is disposed so as to be axially displaceable, **characterised in that** the external toothing (14) engages in the toothed wheel (7).

2. Trailer coupling for motor vehicles according to claim 1, **characterised in that** the cone (4) is disposed on the conical shaft (8) so as to move axially guided by a guide rail (11).

3. Trailer coupling for motor vehicles according to claim 1 or 2, **characterised in that** an external thread (12) of the cone (4) engages in an internal thread (13) which is built into the combined hook (1).

4. Trailer coupling for motor vehicles according to claim 1, 2 or 3, **characterised in that** the cone (4) is designed automatically to lock and unlock positively in a locking opening (15) of the side plate (3).

5. Trailer coupling for motor vehicles according to one of the preceding claims, **characterised in that** at least one grooved pin (16) which engages in a recess (17) of the side plate (3) and is fixed onto the combined hook (1), is designed to limit the swivel movement by means of stops for the operative position and the inoperative position respectively.

6. Trailer coupling for motor vehicles according to one of the preceding claims, **characterised in that** a friction joint is formed between the cone (4) and the toothed wheel (7), transmitting the force of the drive shaft to the combined hook (1).

7. Trailer coupling for motor vehicles according to one of the preceding claims, **characterised in that** it embodies at least one safety device (6), preferably a springloaded ball which latches in a receiving sheath in the combined hook (1).

8. Trailer coupling for motor vehicles according to claim 7, **characterised in that** a holding device (5) is provided for the safety device (6).

9. Trailer coupling for motor vehicles according to claim 4, **characterised in that** a sensor (19), preferably a waterproofed micro switch, is provided, which is designed to emit a signal when the cone (4) is inserted into the locking opening (15).

10. Trailer coupling for motor vehicles according to claim 8 and 9, **characterised in that** the sensor (19) is disposed in the holding device (5).

11. Trailer coupling for motor vehicles according to one of the preceding claims, **characterised in that** between the toothed wheel (7) and the cone (4) there is disposed at least one washer for the toothed wheel (7), preferably a coated toothed wheel washer.

12. Trailer coupling for motor vehicles according to one of the preceding claims, **characterised in that** the combined hook (1) displays a driving element (10) which can be engaged and disengaged by means of an effective connection and the switch for which is disposed outside the passenger cabin, preferably in the boot of the motor vehicle.

## Revendications

1. Attelage de remorque pour véhicules automobiles, avec une tige à boule (1), la tige à boule (1) étant conçue de sorte à pouvoir basculer entre une position de repos et une position de travail, et la tige à boule (1) étant munie d'au moins un dispositif d'entraînement (10), de préférence un entraînement électrique, pour un mouvement de basculement, un mouvement de verrouillage et de déverrouillage, lequel entraînement est relié à un arbre moteur (2) au moyen d'une transmission (20), et la tige à boule (1) étant montée entre deux plaques latérales (3) parallèles reliées entre elles de sorte qu'elle puisse basculer autour de l'arbre moteur (2) auquel elle est reliée et qui est muni d'au moins une denture externe (14), et la denture externe (14) étant en liaison active avec une roue dentée (7) qui est fixée sur un arbre cannelé (8) de sorte qu'ils sont solidaires en rotation et sur lequel est disposé au moins un cône (4) pouvant être déplacé axialement, **caractérisé en ce que** la denture externe (14) s'engrène dans la roue dentée (7).

2. Attelage de remorque pour véhicules automobiles selon la revendication 1, **caractérisé en ce que** le cône (4) est disposé sur l'arbre cannelé (8) de sorte à pouvoir être déplacé axialement par un rail de guidage (11).

3. Attelage de remorque pour véhicules automobiles selon la revendication 1 ou 2, **caractérisé en ce que** le filetage externe (12) du cône (4) s'engage dans un filetage interne (13) disposé sur la tige à boule (1).

4. Attelage pour véhicules automobiles selon la revendication 1, 2 ou 3, **caractérisé en ce que** le cône (4) est conçu de sorte à pouvoir se verrouiller et se déverrouiller automatiquement par engagement de forme en s'engageant dans une ouverture de verrouillage (15) dans la plaque latérale (3).

5. Attelage pour véhicules automobiles selon l'une des revendications précédentes, **caractérisé en ce qu**'au moins une goupille cannelée (16) qui s'engage dans un évidement (17) de la plaque latérale (3) et qui est fixée à la tige à boule (1), est conçue de sorte à limiter le mouvement de basculement au moyen d'une butée pour la position d'utilisation et d'une butée pour la position de repos.

6. Attelage pour véhicules automobiles selon l'une des revendications précédentes, **caractérisé en ce qu'**une liaison par frottement entre le cône (4) et la roue dentée (7) est conçue pour transmettre la force de l'arbre moteur à la tige à boule (1).

7. Attelage pour véhicules automobiles selon l'une des revendications précédentes, **caractérisé en ce qu**'au moins une sécurité (6), de préférence une bille soumise à un ressort, est conçue de sorte à s'encliqueter dans un manchon récepteur (18) dans la tige à boule (1).

8. Attelage pour véhicules automobiles selon la revendication 7, **caractérisé en ce qu'**il est prévu un support (5) pour la sécurité (6).

9. Attelage pour véhicules automobiles selon la revendication 4, **caractérisé en ce qu'**il est prévu un détecteur (19), de préférence un microcommutateur protégé contre l'eau, conçu pour donner un signal lorsque le cône (4) a pénétré dans l'ouverture de verrouillage (15).

10. Attelage pour véhicules automobiles selon la revendication 8 et 9, **caractérisé en ce que** le détecteur (1) est disposé dans le support (5).

11. Attelage pour véhicules automobiles selon l'une des revendications précédentes, **caractérisé en ce qu'**au moins un support de roue dentée (9), de préférence un support de roue dentée enduit, est disposé entre la roue dentée (7) et la cône (4).

12. Attelage pour véhicules automobiles selon l'une des revendications précédentes, **caractérisé en ce que** la tige à boule (1) est munie d'un entraînement (10) qui peut être connecté au moyen d'une liaison active et dont l'interrupteur est disposé en dehors de l'habitacle du véhicule automobile, de préférence dans le coffre.
